# EUROPEAN PATENT SPECIFICATION

(11) **EP 1 631 050 B1**
(45) Date of publication and mention of the grant of the patent: **13.06.2007**
(21) Application number: 05255253.6
(22) Date of filing: 25.08.2005
(51) Int. Cl.: H04M 1/725

(54) **Mobile system, method, and computer program for managing conversational user interface according to detected usage patterns**
Mobiles System, Verfahren und Computerprogramm zur Steuerung einer dialogfähigen Bedienschnittstelle in Abhängigkeit von erfassten Verhaltensmustern
Système mobile, procédé et logiciel pour gérer une interface utilisateur conversationnel en fonction de profils d'utilisation détectés

(30) Priority: 26.08.2004 KR 2004067430; 30.06.2005 US 169801
(43) Date of publication of application: 01.03.2006
(73) Proprietor: Samsung Electronics Co., Ltd., Suwon-si, Gyeonggi-Do (KR)
(72) Inventor: Seungnyung Chung, Yangcheon-gu, Seoul (KR); Joonah, Park, Mapo-gu, Seoul (KR); Keeeung, Kim, Gangdong-gu, Seoul (KR); Wook, Chang, Gangnam-gu, Seoul (KR); Sungjung, Cho, Yeongtong-gu, Suwon-si Gyeonggi-do (KR)
(74) Representative: Greene, Simon Kenneth

(56) References cited:
- WO-A-03/043356
- WO-A-20/05025081
- US-A- 6 016 342
- US-A- 6 084 954
- US-A1- 2003 093 370
- US-A1- 2004 259 515

## Description

### BACKGROUND OF THE INVENTION

Embodiments of the present invention are drawn to systems, methods, and media, recognizing patterns and providing appropriate responses, and more specifically, to systems, methods, and media harmonizing implicit usage pattern analysis for portable devices, potentially with explicit user input, in order to adaptively recognize and/or anticipate a user's desired action based on a detected pattern extracted from correlated data and the potential user input after deployment of the portable devices.

Previously, portable devices were primarily for performing core operations, e.g., operating as a telephone in mobile phones, scheduling/addressing in personal data assistants (PDAs), or data processing in mobile computer, e.g., laptops. Inherently the mobile computers have greater capabilities than mobile phones or PDAs, but recently all types of portable devices have been incorporating greater and greater numbers of none core capabilities. For example, mobile phones have incorporated calendar functions, text messaging, email functionality, and multimedia interactivity. Similarly, PDAs may be able to perform such operations, as well as some operations of the mobile phones, e.g., telephone operations. Similarly, mobile computers are also now incorporating mobile telecommunication capabilities, such as wireless LAN and mobile internet communication. Thus, there is now somewhat of a synergy between the portable devices, providing greater capabilities, based mostly on the available processing power of each device and corresponding power supply constraints.

However, with these additional capabilities unanticipated problems have arisen. Primarily, because of the portable nature of these devices, differing internal and external environmental conditions/events are encroaching on the benefits of having the additional capabilities or at least making the lack of interoperation between the separate capabilities more noticed. For example, though a mobile phone may have variable ring setting levels, e.g., outside, inside, or meeting, there is no way to enable an automated setting of the different ring preferences and instituting of the change from one setting to another based on an internal or external environmental condition/event, i.e., there is no automated way to set a ring preference and there is no automated way to subsequently institute the change. Essentially, the addition of all the capabilities to the portable devices has actually created additional problems in that there is no current automated way to integrate the different capabilities.

As noted above, conventionally, most user interactions with these additional capabilities, e.g., a particular operation happening based upon a particular item in an address book or calendar or a mobile phone's ring volume being based on user location, have only been modifiable based on an initiation from a user. The user, or manufacture, must set initial preferences and linkages between the different capabilities/applications in the portable device and desired operations. Thus, if a user typically enters a meeting at a certain time identified in a calendar and desires the mobile phone ring tone to be set to 'meeting' (perhaps vibration only), then the user has to initiate the setting of the user settings. Then, the operation of that user setting will continue until the user changes the setting. Similarly, if the physical location of the user is determined to have changed, e.g., the user has left the meeting, there is no automated way to set up a desired changing of the phone ringer back to a normal or non-meeting setting. The user must initiate the setting of such a change.

A proactive user interface which may be installed in a computational device is proposed in International Publication number WO 2005/025081 A1. The proactive user interface makes suggestions to the user based on prior experience with particular user and/or pre-programmed patterns.

Ki-Chang Hwang proposes a scheduling apparatus and method of an intelligent mobile communication terminal in United States Patent Application publication number US 2004/0259515 A1. The communication terminal is capable of automatically performing functions of a mobile terminal frequency used by a user over time.

A method of initiating telephone calls from a calling party to called parties based on past calling patterns is presented in United States Patent number US 6,016,342.

A wireless terminal capable of automatically setting its functions is presented by Choi in United States Patent Application publication number US 2003/0093370 A1. The wireless terminal can recognise a pattern for settable functions and automatically change the setting of functions without a user interface.

International Publication number WO 03/043356 A1 presents a method for controlling operation of a mobile device by detecting usage situations. Usage of the device is monitored during a learning phase and, if a pattern of usage is detected, a rule for future situations is stored. These stored rules are applied to change and a user interface of the device when known future situations are encountered.

### SUMMARY OF THE INVENTION

An aspect of the present invention provides a mobile system, according to claim 1.

There is no current way for a portable device to learn before and after deployment/setting. Currently, portable devices must be taught before deployment, i.e., during manufacture or by a user before occurrence of the aforementioned environmental conditions, i.e., currently there is no proactive learning and there is no corresponding automated initiation of operations based on that learning. Therefore, aspects of the present invention solve for at least this deficiency for portable devices by implementing a pattern analysis of the portable device's operations and automating an initiation of operations based on the pattern analysis.

The determining of whether to initiate the dialogue may further include basing the determination of whether to initiate the dialogue on a probability factor stored in the mobile system indicating a probability that the user would prefer the operation of the mobile device be automatically implemented without dialogue. The probability that the user would prefer the operation of the mobile device be automatically implemented without dialogue can be based on previous repetitive approvals by the user of previous dialogues regarding the pattern.

The probability factor may further be arranged to identify a reluctance of the user to implement the operation of the mobile device and/or receive the dialogue. The probability factor may identify the reluctance of the user to implement the operation of the mobile device and/or receive the dialogue is based on previous repetitive disapprovals by the user of previous dialogues regarding the pattern.

The rule may be a multi-element rule requiring at least two elements to be met for the pattern to match a previously known pattern of the mobile system.

The mobile system may further include a device sensor system including at least one of a location information sensor module to determine a location of the mobile device, a time sensor module to determine a current time, an agenda sensor module to determine a current and upcoming agenda for the user from an agenda database stored in the mobile system, a contacts sensor module to extract a contacts' phone number and additional information from a contacts database stored in the mobile system, and/or a call log sensor module to extract time, duration and contact information from a call log stored in the mobile system.

The pattern extractor module may compare operational data of at least one of at least one location data, at least one current time data, at least one agenda data, and/or at least one call log data and contacts data for the mobile device to extract the pattern. The pattern analyzer module may further compare the operational data with the rule to determine whether a current user behavior is contrary to the rule, indicating the pattern is the new pattern, whether the pattern is the new pattern based on repetitive user behaviors and also indicating a new rule, or whether the user's next action will be strongly predicted according to the pattern and based on the rule being met.

The character agent module may modify an appearance and behavior of a character agent interacting with the user.

The mobile device may also be a mobile communication system. When the rule may correspond to anticipating a next cell station or next mobile device location based on the pattern, and the character agent module may initiate the dialogue with the user regarding the next cell station or next mobile device location. The rule may also corresponds to agenda information and time information to anticipate a change in a messaging alert operation of the mobile device and automating the change in the messaging alert operation. The automating of the change in the messaging alert operation may include initiating the dialogue with the user as to whether to change the messaging alert operation of the mobile device based on previous changing of the messaging alert operation upon similar agenda information and time information.

In addition, the rule may corresponds to at least two of call log information, contact information, and time information to anticipate a user's next messaging operation based on previous messaging operations. Upon anticipating the user's next messaging operation, there may be an initiating of the dialogue with the user as to whether to initiate the next messaging operation.

A user response to the dialogue initiation may include one of pressing an OK button, pressing a cancel button, ceasing operation of the mobile device, and manually inputting a response in a text box.

The initiating of the dialogue by the character agent module may be delayed based upon an operational state of the mobile device. In addition, the operational state may include at least one of a current occurrence of a call operation, a data transmission operation, and whether the mobile device is in a stand-by mode. Further, an urgency of the dialogue may determine whether the character agent module delays initiation of the dialogue, thereby overriding the delaying based upon the operational state of the mobile device. Here, urgencies of potential dialogues may also be set by a user to override the delaying based upon the operational state of the mobile device. When the character agent module overrides the delaying of the dialogue and initiates the dialogue, the dialogue may also be initiated through a beeper of the mobile device. Similarly, when the character agent module overrides the delaying of the dialogue and initiates the dialogue, the dialogue may be initiated through a vibrator of the mobile device.

In an aspect of the present invention provides an automated mobile operating method according to claim 25.

The method may further include determining a location of the mobile device, determining a current time, determining a current and upcoming agenda for the user, extracting a contacts' phone number and additional information from a contacts database, and/or extracting time, duration and contact information from a call log.

A further aspect of the invention provides a computer program comprising computer program code means adopted to perform the method of the invention.

Embodiments of the present invention set forth a mobile system and method adaptively recognizing and/or anticipating actions based on a detected pattern extracted from correlated data and the potential user input after deployment of a corresponding portable device

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
Fig. 1 is a block diagram schematically illustrating a system for managing conversational user interfaces, according to an embodiment of the present invention;
Fig. 2 illustrates a device sensor, according to an embodiment of the present invention;
Fig. 3 illustrates a device sensor interacting with a pattern extractor, according to an embodiment of the present invention;
Fig. 4 is a block diagram illustrating an interaction between a pattern extractor and a pattern analyzer, according to an embodiment of the present invention;
Fig. 5 is a flow chart for a pattern analyzing method, according to an embodiment of the present invention;
Fig. 6 is a block diagram illustrating an interaction between a pattern analyzer and a dialog analyzer, according to an embodiment of the present invention; and
Fig. 7 is a flow chart for a dialog managing method, according to an embodiment of the present invention.

### DETAILED DESCRIPTION OF THE EMBODIMENTS

Reference will now be made in detail to embodiments of the present invention, examples of which are illustrated in the accompanying drawings, wherein like reference numerals refer to the like elements throughout. The embodiments are described below in order to explain the present invention by referring to the figures.

Portable devices have recently been incorporating more and more different capabilities, without sufficient controlled interaction between the different capabilities. The following embodiments will primarily reference mobile phones as an example of a portable device, but embodiments of the present invention are not limited to the same. As many different portable devices suffer from the same conventional drawbacks, embodiments of the present invention can be equally applied as needed.

In mobile phones, there are many different additional capabilities in addition to merely performing telephone communication. Such capabilities include calendar functions, text messaging, email functionality, multimedia interactivity, and location determination, e.g., through GPS or cell station IDs. The individual operations of these different capabilities can be defined by user preference settings. As only an example, some user preference settings have conventionally included power-on lock, key pad lock, time and date, language, greeting, back light, contrast, system select, private network, public network, phone silent, ring tone, ring volume, vibrate, ear volume, key sound, access tone, minute alert, tone send, message alert, profiles, activation, screen calls, and next call type.

Similarly, conventionally, depending on a condition or state of specified conditions or events a user or manufacturer can initially set particular operations to occur upon such specified conditions of events based on the user preference settings. According to embodiments of the present invention, specified conditions could include: calendar items, such as working hours, non-working hours, traveling times, and dates, vacation dates, meeting hours, weekend and holiday dates, other calendared meetings or items; telephone battery conditions, e.g., battery high, battery low, etc.; differing network detections, from private internal wireless networks, public networks, or LANs; the detection between different cellular networks or cells; detecting whether/which callers are listed in an address book; and/or the detection of the mobile phone's location based on the above different network detections, cellular network or cells, or GPS, for example. Such specified conditions can include the detection of one of the conditions or a change from one condition to another, for example, noting that the above list is not exhaustive of all potential specified conditions. Further, the happening of a condition, or a change in conditions, can also be referred to as an event, though the referenced use of event or condition in the present application may be interchangeable.

As noted above, these conditions/preferences are already specified, either by the user or manufacturer before deployment. Thus, upon deployment the mobile phone may conventionally only perform particular functions upon the occurrence of particular conditions based on particular user preferences. Any further modification of the user preferences/conditions to perform differently upon a condition happening must be reset. There is no learning capability while the mobile phone is deployed and there is no automated initiation of operations or further preference/condition modifications based on any pattern analysis of the operation of the mobile phone.

These conventional deficiencies have been overcome by the following embodiments of the present invention.

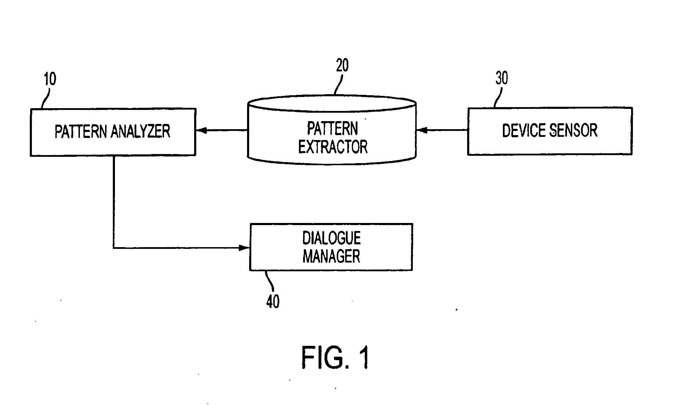

Accordingly, FIG. 1 illustrates a system including a pattern analyzer 10, a pattern extractor 20, a device sensor 30, and a dialogue manager 40, according to an embodiment of the present invention. The device sensor 30 can sense input to the system, and provide or make available the sensed result to the pattern extractor 20. The pattern extractor 20 can extract a pattern based upon the sensed result to the pattern analyzer 10, and the pattern analyzer 10 can then analyze the extracted pattern and provide the analyzed result to the dialogue manager 40. The dialogue manager 40 thereafter determines an appropriate dialogue, if necessary, to send to the user based upon the analyzed result. Here, the pattern analyzer 10, the pattern extractor 20, the device sensor 30, and the dialogue manager 40 may be embodied in a single mobile device, e.g., a mobile phone. Alternatively, as an additional example, the device sensor 30 can be embodied in the mobile phone and the pattern analyzer 10, the pattern extractor 20, and the dialogue manager 40 may be embodied in a separate remote device(s). In this case, if the mobile phone does not have sufficient processing power, computations can be performed at the remote device and transmitted back to the mobile phone. Alternative arrangements are possible, based on differing available processing capabilities, device power constraints, or other reasons for selectively performing different operations locally or remotely for implementation on the mobile device.

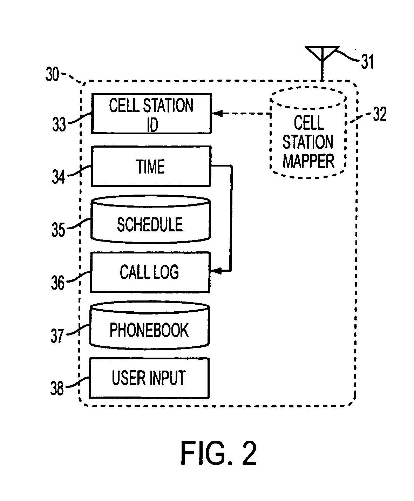

An example of the device sensor 30 is illustrated in FIG. 2. The device sensor 30 captures raw data events from inside and/or outside the device. The sensor 30 converts and transfers the event information to the pattern extractor 20. By way of example, in Table 1 below, the captured events could include a time stamp representing the capture time information at which a condition (hereinafter referred to as an 'event') occurs. An event type can also be captured to categorize what has occurred at each time. Factors 1 and 2 can further be captured to capture factors relevant to the event type, e.g., from the event type 'Call', the corresponding time stamp is noted, along with the corresponding phone number, and length of the phone call. The event type 'Cell-Station-Changed' corresponds to a current cell station upon a cell station having changed, with the Factor 1 being the station ID of the current station captured. When a change in mode is made, the time can also be recorded. Further, while Table 1 shows only two factors, it is understood that additional factors can be used, or that only a single factor need be recorded for all or particular events, according to aspects of the invention. Moreover, additional event types can be used and embodiments of the present invention are not limited to the event types set forth in Table 1.

**Table 1**

| Time stamp | Event type | Factor #1 | Factor #2 |
|---|---|---|---|
| 20040802 07:32 | Cell-Station-Changed | 12345 | |
| 20040802 07:36 | Cell-Station-Changed | 12346 | |
| 20040802 11:02 | Call | 010-xxxx-xxxx | 03:54 |
| 20040802 15:27 | PhoneNumberSaved | 010-oooo-oooo | Michael |
| 20040802 19:10 | Manner-Mode-Set | | |
| ... | ... | ... | ... |

Specifically, regarding the device sensor 30 shown in Fig. 2, a signal can be received and transmitted through an antenna 31, e.g., using a cell station manager 32. A controller (not shown) of the device sensor 30 can detect, from the cell station manager 32, the cell station ID and stores the cell station ID in memory 33. As noted above, the device sensor 30 may also record information about a time of a call in time memory 34. Further, a schedule may be stored in a schedule memory 35, a log of calls made using the device sensor 30 may be stored in call log memory 36, a phone book of stored numbers used by the device sensor 30 may be stored in memory 37, and specific input user data may be stored in user input data in memory 38.

Other aspects of the device sensor 30 needed to make phone calls, such as key pads and/or displays, are not shown in FIG. 2 for the purpose of clarity. It is also understood that any of the memories 33, 34, 35, 36, 37 and 38 need not be used in all aspects of the invention, or limited thereto, and/or can be supplemented through the use of external data input. By way of example, the user schedule stored in schedule memory 35 and/or phonebook stored in phonebook memory 37 could be input or accessed through programs such as Microsoft Outlook, the Palm Desktop or other such electronic schedulers which offer a more convenient mechanism by which to input or record complex scheduling and phonebook data. In another embodiment of the present invention, any of the memories 33, 34, 35, 36, 37 and 38 may be remote from the mobile phone, or selectively included within the mobile phone or a remote site, and/or the memories 33, 34, 35, 36, 37 and 38 may access additional memories storing more complete stored data, e.g., a mobile phone may include a separate memory for schedule information and schedule memory 35 may access the same.

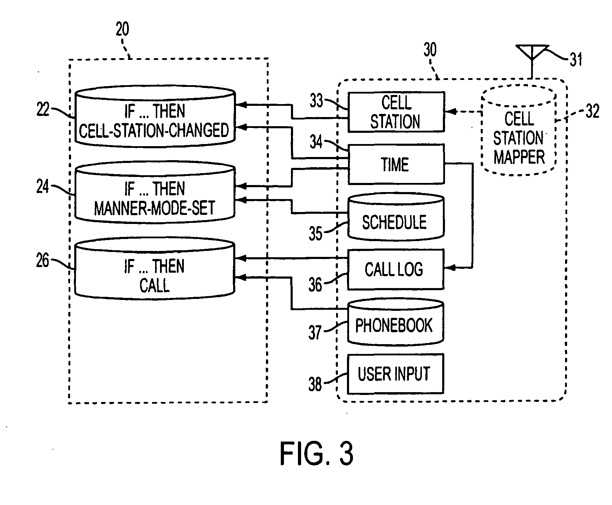

Fig. 3 illustrates an interaction between the device sensor 30 and the pattern extractor 20, according to an embodiment of the present invention. The pattern extractor 20 may extract pattern data from repetitive user behaviors, which can be assumed with the time-series (dynamic) data from device sensor 30. The pattern extractor 20 can further extract useful information from non-time-series (static) data such as a schedule or a phonebook, noting that the same can also be implemented as non-time-series changes.

As an example, the pattern extractor 20 may store rules 22, 24, 26, which could be rules extracted after analysis of raw data stored in memories 33 through 38. Here, using Table 1 and FIG. 3, it can be determined from the time memory 34 and from the cell station ID memory 33 that a cell station has changed, with the factor number 1 ('12345'), identifying the new cell station. It can further be detected at another time stamp read from the time memory 34 and the cell station ID 33 that a further cell station change has occurred, e.g., factor number 2 of the second time stamp of Table 1 being cell station ID '12346.' In this way, the rule extractor 20 is able to extract a rule 22 which links the time and cell station ID data stored in memories 33 and 34 in order to determine whether an event type such as a change of cell station has occurred.

Similarly, the time information stored in time memory 34 and a call number information stored in call log memory 36 can be used to determine whether a call has been placed, and at what time the call was made. This data can be used by the pattern extractor 20 to extract the if/then rule 26, predicting when a phone call may be placed in the future, thereby extracting a pattern of when phone calls are made or when phone calls are made to particular individuals.

The pattern extractor 20 may also extract rule 24, in regards to a current time stored in time data memory 34 as well as a schedule and schedule memory 35, in order to determine whether/when a manner mode should be set, for example, based upon whether a user in the past has set a manner mode for certain types of scheduled events (e.g. such as meetings). It is further understood that the pattern extractor 20 could extract additional or different rules based upon review of the raw data stored by the device sensor 30.

As an example of another rule, an IF-THEN rule could be implemented using a sequential pattern mining algorithm. Such a rule could be: if "Cell-Station-Changed=12345" and "Cell-Station-Changed=12346" then "Cell-Station-Changed=12347" (Support=0.05, Confidence=0.6), i.e., there is a chance of 0.05 that the cell station ID change will be the sequence of "12345", "12346" and "12347" (the support denotes the significance of the rule), and there is a chance of 0.6 that the cell station ID change will be "12347" given that the previous cell station ID changes were "12345" and "12347" (the confidence denotes the certainty of the THEN clause)

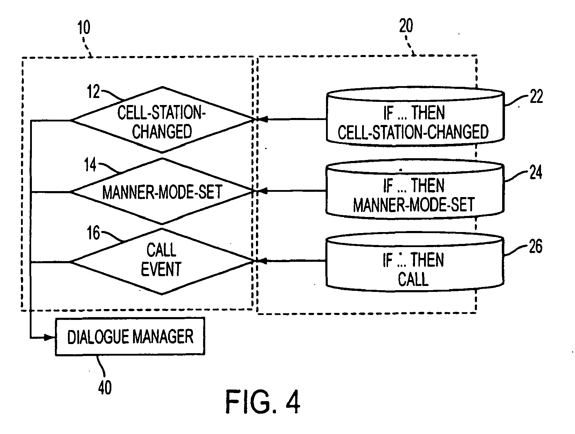

Now that the collection of raw data and extraction of rules have been explained, with reference to FIGS. 2 and 3, automated interactions with a user and/or automated actions will be further explained with reference to FIGS. 4-6.

FIG. 4 illustrates the pattern analyzer 10 and the pattern extractor 20, according to an embodiment of the present invention. In this example, the pattern analyzer 10 may include a cell station change event detector 12, a vibration pattern event detector 14, and a call pattern detector 16. The cell pattern event detector 12 detects results of the if/then rule change output from the rule 22 of the pattern extractor 20. If the cell station change event occurs, due to a change in the cell station ID detected by the rule 22, the cell pattern event detector 12 can output an indicator to a dialog manager 40 that the cell station has been changed. Similarly, the vibration pattern event detector 14 can detect the result of the if/then vibration rule 24, identifying whether a manner mode is likely to be set. Thus, if the if/then rule is satisfied, the vibration pattern event detector 14 outputs an indicator to the dialog manager that the manner mode may be set. Likewise, the call pattern event detector 16 may determine from the if/then call rule 26 whether or not a call has been made to a particular person at a particular time, e.g., the call wasn't made by usually is. If this if/then rule is satisfied, the call pattern event detector 16 forwards an indicator to the dialog manager 40 that a similar particular call may be desired. Although FIG. 4 only illustrates 3 event detectors 12, 14, 16, it is understood that multiple and/or different event detectors can be implemented, e.g., based upon the number of rules existing and newly implemented in the pattern extractor 20.

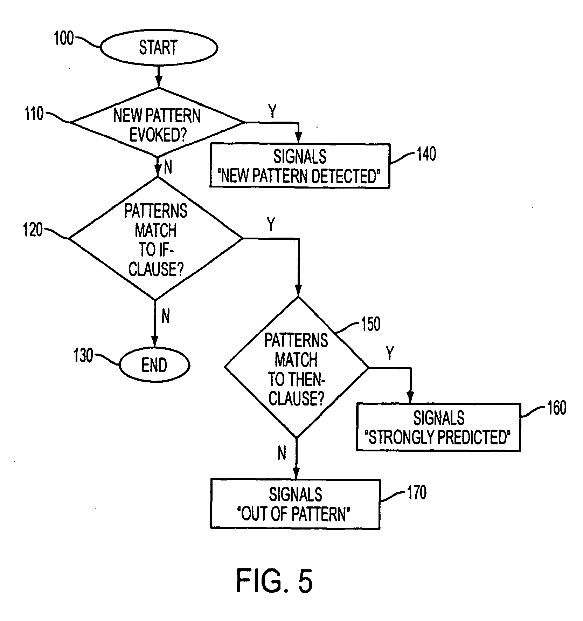

A flowchart of a pattern analyzing method is shown in FIG. 5, according to an embodiment of the present invention. As shown, the pattern analyzer 10 can identify events when a user's present behavior deviates from an extracted pattern, such that a new pattern can be found by the user's new repetitive behaviors, and/or a user's intended action can be strongly predicted according to the extracted pattern not being deviated from.

As shown in Fig. 5, the pattern analyzer 10 is able to both detect new patterns based upon the rules extracted in the pattern extractor 20, and is also able to determine whether one of the already detected patterns is strongly indicative of future behavior or is indicative of whether future behavior is not likely to occur. Specifically, the pattern extractor 10 starts the process at operation 100 by detecting patterns, e.g., from the rules stored in the pattern extractor 20 and/or a combination of raw data detected by pattern extractor 20. In operation 110, the pattern analyzer 10 recognizes whether a new pattern is detected, and then signals that a new pattern has been detected, in operation 140. As such, and as will be described more fully below, the user can be given an option as to how the new pattern is be accounted for, through new dialogs or new actions. Conversely, if the pattern adheres to a preexisting rule, the pattern analyzer 10 then determines whether the 'if' portion of the if/then rule has been satisfied, in operation 120. If the condition predicate (i.e. the 'if'portion of the clause) is not satisfied the pattern analyzer determines that no preexisting pattern has been detected, in operation 130.

However, if the pattern analyzer determines in operation 120 that the 'if' clause has been satisfied, the pattern analyzer 10 then determines in operation 150 whether or not the 'then' clause has been satisfied. Specifically, if the pattern analyzer 110 determines in operation 150 that both the 'if and the 'then' clauses of the rule detected from the pattern extractor 20 are satisfied, the pattern analyzer determines that the detected raw data is a strong predicator that an event is going to occur, in operation 160. However, if the 'then' clause is not satisfied, as determined in operation 150, then the pattern analyzer 110 determines that the raw data captured is not a strong indicator that a future event will occur, in operation 170. In this way, the pattern analyzer 10 is able to determine whether a user's present behavior deviates from an extracted pattern, is able to detect when a new pattern has been found based upon repetitive user behavior, and is also able to determine whether or not the user's likely next action, based upon a combination of events, is strongly predicted according to the extracted pattern boundary.

The strength of the predictor can be recorded to strengthen or weaken the probability of the detected pattern reoccurring. Based on such a probability, particular actions can be automatically implemented if the probability is high, or dialogs can be instituted to confirm the particular action if the probability is not at least a predetermined level, for example. As the user acknowledges the implementation of the action, the probability of that action being implemented automatically increases, i.e., the probability may increase over the predetermined level. Similarly, if a user routinely changes/cancels an automated action during the existence of the pattern, i.e., the user is evidencing a lack of interest in the automated action, the probability may be decreased. When the probability decreases below the predetermined level dialogs requesting confirmation of the action may be reinstituted. Further, if the user routinely declines the implementation of the action the action and/or pattern may be removed or suspended.

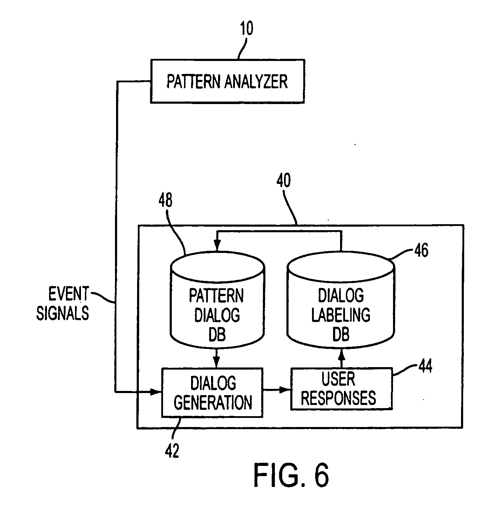

FIG. 6 shows a dialogue manager (also referred to as a character agent module) 40, according to an embodiment of the present invention. The character agent module 40 initiates, when an event is triggered, an appropriate dialogue in order to guide the user's explicit input, according to a pre-defined dialogue database. As shown, the character agent module 40 includes a dialog generation unit 42, a user responses module 44, a dialog labeling database 46, and a pattern dialog matching database 48. The dialog generation unit 42 may receive the event signals from the pattern analyzer 10 indicating that a pattern has been detected and a strong indication that a future event will occur based on the user's behavior. The dialog generation unit 42 may then output, through a display of the device sensor 30, for example, a predetermined dialog based upon the event signal.

By way of example, if the time stored in the time ID data memory 34, and a schedule stored in the schedule data memory 35, indicate, through the pattern extractor 20 and the pattern analyzer 10, that an event is to occur, e.g., for a meeting, the dialog manager 42 may output a dialog as follows: "meeting started. Would you like to set a manner mode?" Based upon the output dialog from the dialog generation 42, the user provides some sort of response. In this example the response could be "yes, no, or ignore." However, it is understood that other types of responses can occur, such as the turning off of the unit or other such indications. Based upon the user response, detected by the user response receiver 44, the dialog manager 40 produces a dialog label for a particular set of events. By way of example, and as shown in Table 2, the dialog labeling database might include a label that is input by the user which labels a particular location based on the cell station ID or may input a name associated with a particular called, based upon the user response and after initiation by character agent module 40, detected by the user response receiver 44. In addition, when no labeling is further required, the accuracy of the rule as well as the accompanying dialog can be stored as a pattern in dialog database 48, which is used by the dialog generation unit 42 to output the proper dialog associated with each particular event signal.

**Table 2**

| Raw Data | Label |
|---|---|
| Cell Station id:12347 | Workplace |
| Phone#:010-oooo-oooo | Michael |

By way of example and as shown in Table 3 below, the pattern dialog database 48 may include a dialog for when a user has ventured into a new area. For example, if the event that occurred is a change of cell station and the event signal is that the pattern does not match a known location, the dialog could be programmed to request that the user indicate the new location. While not required, a weighing factor P is further included in the database 48 such that if the user has typically responded to a particular dialog, the dialog is continued. However, when the user has not responded to the dialog, the P number can be reduced in order to prevent the system from outputting dialogs not desired by the user, similar to above.

**Table 3**

| THEN-clause | Event signals | Dialog Contents | P (Dialog Contents) |
|---|---|---|---|
| Cell-Station-Changed (34562) | (1) Out of Pattern | "Huh? I've never been at this place before. Where am I?" | 1.0 |
| Cell-Station-Changed (12347) | (2) New Pattern Detected | "You seem to be around here quite often. Where am I?" [ ] | 1.0 |
| Cell-Station-Changed (86356) | (3) Strongly Predicted | "Welcome to [ ]" | 1.0 |

By way of further example, the pattern database 48 might determine from a cell station change that a new pattern has been detected and that a user has been to a particular location often. In this event, the dialog output through the dialog generation unit 42 indicates that the user has been in this particular location before and requests a label for this location for storage in the dialog labeling database 46. As such, if the user goes to a particular location often and the location is improperly labeled, the dialog generation unit is able to detect from an event change (i.e. a cell station has been changed) that a particular location is known and labeled, then the dialog generation may output a dialog such as "welcome to the particular location." It is also understood multiple rules and dialogs can be developed or input by a user in different embodiments of the present invention.

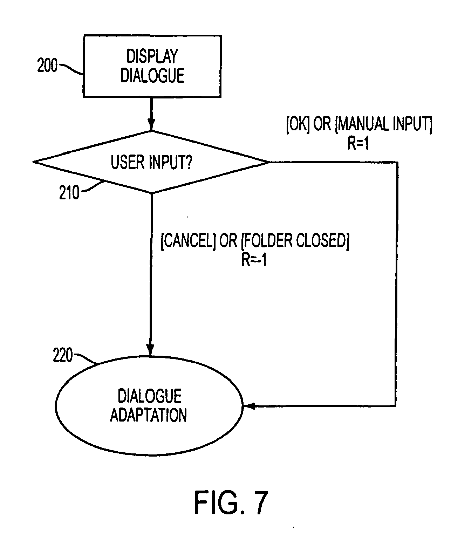

While not required in all aspects of the invention, the dialog manager 40 can improve the dialog output through the dialog generation unit 42 by rating the stored dialog to be used against past user behavior. Specifically, and as shown in Fig. 7, the dialog manager 40 may determine, after a dialog has been displayed in operation 200, whether there has been user input, in operation 210. If the user has input an indication such as 'ok' or 'yes,' an R value may be added to the P valued stored in the database 48. This R value indicates that the user desires this type of dialog in the future. If in operation 210 the user hits 'cancel' or indicates 'no,' a negative R value can be applied to the P stored in the database 48, thereby indicating that a particular dialog is no longer desired or is not highly accurate. The resulting R value from the user input operation 210 can be stored in a dialog adaptation routine 220, and the P value stored in the patterned dialog database 48 can be adjusted according to user preference.

By way of further example, in an embodiment of the present invention, an event could trigger the following dialogue: "Meeting Started. Would you like to set to manner mode?" The pre-defined possible responses for this dialogue could be "Yes/No/lgnore." Additional examples are shown above in Tables 2 and 3. In Table 2, the examples pertain to a dialogue labeling database as shown in FIG. 6, and in Table 3, the examples also pertain to a pattern to dialog database as shown in FIG. 6.

With further reference to Tables 2 and 3, when user behavior is contrary to the extracted pattern, i.e., where the 'THEN'-clause dictates a cell station change, and the change is different from the current cell station ID, the dialogue can be "Huh? Huh? I've never been at this place before. Where am I?" The predefined responses could be: "Type in/Cancel/Ignore." Additionally, where the 'THEN'-clause dictates the making of a call, but the user doesn't make the call, the dialogue could be "Well, I thought you're gonna call Jane around this time...," and the predefined responses could be: "Thanks/No/Ignore."

When a new pattern is found from repetitive user behaviors, the 'THEN'-clause may indicate that a cell station change, e.g., using the following dialogue: "You seem to be around here quite often. Where am I?" The predefined response could be: "Type in/No/Ignore." Additionally, if the 'THEN'-clause dictates the making of a call, the dialogue can be "You call Jane quite often. What is she?" The predefined response could be: "Type in/No/Ignore."

When a user's next action is strongly predicted, according to an extracted pattern, the 'THEN'-clause could indicate a cell station change by comparing, by way of example, a subway station and a cell station ID map to enable the mobile phone to announce the next subway station, e.g., using the following dialogue: "Next station is City Hall. The exit is on your left." The predefined response could be: "Thanks//No/Ignore." When a 'THEN'-clause indicates the changing of the mobile phone to the manner mode, the dialogue could be "Meeting started. Would you like to set to manner mode?" The predefined responses could be "Yes/No/Ignore."

Such dialogues may be delayed until a user is not available, e.g., so not to interrupt the user or interrupt other operations of a portable device. For example, the dialogue manager may sense whether, a folder/flip top of the portable device is open or closed, i.e., whether the portable device is in a stand-by mode. When the folder/flip top is open a predetermined length of time, e.g., a second, the dialogue manager may then display a dialogue. In such a case, the dialogue manager may also determine whether the display of the dialogue is relevant, e.g., if a long period of time has passed since the dialogue would have immediately been displayed, the dialogue may not be relevant at a later time.

Similarly, immediate display of dialogues may be delayed if the dialogue manager detects a call is in progress, and may subsequently display the dialogue immediately after the call is over, or after a predetermined length of time, e.g., a second has lapsed. Further, if the portable device is being used to transmit a message/file/multimedia, the display of the dialogue may also be temporarily delayed. Additional operations may be set to delay an immediate display of a dialogue, either by a manufacturer or manually by a user of the portable device, for example.

In addition, there may be a hierarchy for delays of dialogues, i.e., some dialogues may have greater urgency over other dialogues. For example, if a user of a portable device always has a meeting, or phone call, or travel itinerary, a dialogue to the user of the upcoming occurrence of the meeting, call, or travel may override other delay settings and be provided to the user immediately. As another example, if a user's next action is strongly predicted, and the user diverts from this prediction, this diversion may be considered an urgent dialogue and immediately displayed.

Thus, in the urgent dialogue display, even if the portable device is not open, a call is in progress, or a message is be transmitted, an urgent dialogue or alarm, e.g., a vibrator (or a beeper) of the portable device, can be immediately instituted to inform the user of the current urgent situation. Similar to above, the hierarchy of delays, or the determination of what would be considered urgent, can be set by a manufacture or user, for example.

Embodiments of the present invention can perform adaptive learning, e.g., to reinforce the dialogues. As shown in FIG. 7, Dialogues can be selected based on a probability distribution P (Dialogue). Thus, if the user presses the cancel button or closes the folder, P (Dialogue) decreases. Similarly, if the user presses the ok button or performs a manual input, P (Dialogue) increases. In this way, the accuracy of the dialogue is increased. Similar to above, if P increases to a sufficiently high level then dialogs may not be further necessary and the underlying action may be automatically implemented. The sufficient level (predetermined level) can be determined through experimentation and may be different for different environments/conditions/events.

Embodiments of the present invention include methods harmonizing explicit user input and implicit usage pattern analysis after deployment of the applied systems, especially for mobile devices, in order to adaptively recognize user's intention in most every possible context and proactively suggest useful services by automated initiating of dialogues. Embodiments of the present invention extract usage patterns by combining raw data, such as location data (e.g., GPS or nearby cellular station IDs), call data, schedules, phone book entries, time stamps, etc. By way of example, location data can be combined with a time stamp to reveal traveling patterns of the user. By way of another example, a schedule can be combined with a time to determine if the schedule contains a 'meeting' such that a manner mode should be enabled. By way of a further example, a phone number information of caller can be combined with a call log (including duration) to determine, based on whether the duration is frequent and long, that the caller is an important person to the user. By way of still another example, a phone number of a caller can be combined with a time stamp to determine if a regular calling pattern can be found, and thereby suggest a user make a call at the appropriate time and potentially to a particular person.

By exploiting the implicitly extracted usage patterns, the device can suggest appropriate services which might correspond with the user's interests in a current context, as well as guide the user to explicitly input additional preference information. By way of example, the mobile phone could suggest "Meeting started. Would you like to set manner mode during it?" and the user could answer "yes or no, or ignore the suggestion."

Embodiments of the present invention may be implemented through general-purpose computer, for example, by implementing computer readable code/instructions from a medium, e.g., a computer-readable medium The media may include, but is not limited to, a storage/transfer media such as magnetic storage media (ROMs, RAMs, floppy disks, magnetic tapes, etc.), optically readable media (CD-ROMs, DVDs, etc.), and carrier waves (e.g., transmission over the internet). Embodiments of the present invention may also be embodied as a medium having a computer-readable code embodied therein for causing a number of computer systems connected via a network to perform distributed processing. Functional programs, codes and code segments for embodying the present invention may be easily deduced by programmers in the art which the present invention belongs to.

Although a few embodiments of the present invention have been shown and described, it would be appreciated by those skilled in the art that changes may be made in this embodiment without departing from the principles of the invention, the scope of which is defined in the claims.

## Claims

1. A mobile system, comprising:
a pattern extractor module (20) arranged to detect a pattern of operation of a mobile device based on operational data for the mobile device;
a pattern analyzer module (10) arranged to compare the pattern and the operational data of the mobile device to determine whether the pattern is a new pattern not previously recognized for the mobile system, and, if it is determined that the pattern is not new, to determine whether to initiate a dialogue with a user regarding the pattern based on an element of a corresponding rule being met for the pattern; and
a character agent module (40) arranged to initiate the dialogue with the user requesting guidance on implementation of an operation of the mobile device based on the pattern,
and **characterized in that** the pattern analyzer module is arranged to initiate a dialogue with the user to record information for a new pattern if it is determined that the pattern is new.

2. The mobile system of claim 1, wherein the pattern analyzer module (10) is arranged to base the determination of whether to initiate the dialogue on a probability factor stored in the mobile system indicating a probability that the user would prefer the operation of the mobile device be automatically implemented without dialogue.

3. The mobile system of claim 2, wherein the probability that the user would prefer the operation of the mobile device be automatically implemented without dialogue is based on previous repetitive approvals by the user of previous dialogues regarding the pattern.

4. The mobile system of claim 2, wherein the probability factor is further arranged to identify a reluctance of the user to implement the operation of the mobile device and/or receive the dialogue.

5. The mobile system of claim 4, wherein the probability factor further identifying the reluctance of the user to implement the operation of the mobile device and/or receive the dialogue is based on previous repetitive disapprovals by the user of previous dialogues regarding the pattern.

6. The mobile system of any preceding claim, wherein the rule is a multi-element rule requiring at least two elements to be met for the pattern to match a previously known pattern of the mobile system.

7. The mobile system of any preceding claim, further comprising a device sensor system (30) comprising at least one of:
a location information (33) sensor module arranged to determine a location of the mobile device;
a time sensor module (34) arranged to determine a current time;
an agenda sensor module (35) arranged to determine a current and upcoming agenda for the user from an agenda database stored in the mobile system;
a contacts sensor module (37) arranged to extract a contacts' phone number and additional information from a contacts database stored in the mobile system; and/or
a call log sensor module (36) arranged to extract time, duration and contact information from a call log stored in the mobile system.

8. The mobile system of any preceding claim, wherein the pattern extractor module (20) is arranged to compare operational data of at least one of at least one location data, at least one current time data, at least one agenda data, and/or at least one call log data and contacts data for the mobile device to extract the pattern.

9. The mobile system of claim 8, wherein the pattern analyzer module (10) further is arranged to compare the operational data with the rule to determine whether a current user behavior is contrary to the rule, to indicate the pattern is the new pattern, whether the pattern is the new pattern based on repetitive user behaviors and also to indicate a new rule, or whether the user's next action will be strongly predicted according to the pattern and based on the rule being met.

10. The mobile system of any preceding claim, wherein the character agent module (40) is arranged to modify an appearance and behavior of a character agent interacting with the user.

11. The mobile system of any preceding claim, wherein the mobile device comprises a mobile communication system.

12. The mobile system of claim 11, wherein the rule corresponds to anticipating a next cell station or next mobile device location based on the pattern, and the character agent module (40) is arranged to initiate the dialogue with the user regarding the next cell station or next mobile device location.

13. The mobile system of claim 11 or 12, wherein the rule corresponds to agenda information and time information is arranged to anticipate a change in a messaging alert operation of the mobile device and the system is arranged to automate the change in the messaging alert operation.

14. The mobile system of claim 13, wherein the automating of the change in the messaging alert operation comprises initiating the dialogue with the user as to whether to change the messaging alert operation of the mobile device based on previous changing of the messaging alert operation upon similar agenda information and time information.

15. The mobile system of any of claims 11 to 14, wherein the rule corresponds to at least two of call log information, contact information, and time information to anticipate a user's next messaging operation based on previous messaging operations.

16. The mobile system of claim 15, arranged to initiate the dialogue with the user as to whether to initiate the next messaging operation upon anticipating the user's next messaging operation.

17. The mobile system of any preceding claim, arranged to accept as a user response to the dialogue initiation one of pressing an OK button, pressing a cancel button, ceasing operation of the mobile device, and manually inputting a response in a text box.

18. The mobile system of any preceding claim, arranged to delay the initiating of the dialogue by the character agent module (40) is delayed based upon an operational state of the mobile device.

19. The mobile system of claim 18, wherein the operational state includes at least one of a current occurrence of a call operation, a data transmission operation, and whether the mobile device is in a stand-by mode.

20. The mobile system of claim 18 or 19, wherein an urgency of the dialogue is arranged to determine whether the character agent module (40) delays initiation of the dialogue, thereby overriding the delaying based upon the operational state of the mobile device.

21. The mobile system of claim 20, arranged to permit the urgencies of potential dialogues to be set by a user to override the delaying based upon the operational state of the mobile device.

22. The mobile system of claim 20 or 21, wherein, when the character agent module (40) is arranged to override the delaying of the dialogue and to initiate the dialogue, the dialogue is arranged to be initiated through a beeper of the mobile device.

23. The mobile system of claim 20, 21 or 22, arranged such that, when the character agent module (40) is arranged to override the delaying of the dialogue and to initiate the dialogue, it is adapted to initiate the dialogue through a vibrator of the mobile device.

24. The mobile system of any preceding claim, wherein the mobile phone system is a mobile phone.

25. An automated mobile operating method comprising the steps of:
extracting a pattern of operation of a mobile device based on operational data for the mobile device;
comparing the pattern and the operational data of the mobile device to determine whether the pattern is a new pattern not previously recognized for the mobile system, and, if it is determined that the pattern is not new, determining whether to initiate a dialogue with a user regarding the pattern based on an element of a corresponding rule being met for the pattern; and
performing the dialogue with the user, when initiated, requesting guidance on implementation of an operation of the mobile device based on the pattern
and **characterized by** the step of if it is determined that the pattern is new, initiating a dialogue with the user to record information for the new pattern.

26. The method of claim 25, wherein the determining of whether to initiate the dialogue further comprises basing the determination of whether to initiate the dialogue on a probability factor stored in the mobile system indicating a probability that the user would prefer the operation of the mobile device be automatically implemented without dialogue.

27. The method of claim 26, wherein the probability that the user would prefer the operation of the mobile device be automatically implemented without dialogue is based on previous repetitive approvals by the user of previous dialogues regarding the pattern.

28. The method of claim 26 or 27, wherein the probability factor further identifies a reluctance of the user to implement the operation of the mobile device and/or receive the dialogue.

29. The method of claim 28, wherein the probability factor further identifying the reluctance of the user to implement the operation of the mobile device and/or receive the dialogue is based on previous repetitive disapprovals by the user of previous dialogues regarding the pattern.

30. The method of any of claims 25 to 29, wherein the rule is a multi-element rule requiring at least two elements to be met for the pattern to match a previously known pattern.

31. The method of any of claims 25 to 30, further comprising at least one of:
determining a location of the mobile device;
determining a current time;
determining a current and upcoming agenda for the user;
extracting a contacts' phone number and additional information from a contacts database; and/or
extracting time, duration and contact information from a call log.

32. The method of any of claims 25 to 31, wherein the extracting of the pattern further comprises comparing operational data of at least one of at least one location data, at least one current time data, at least one agenda data, and/or at least one call log data and contacts data for the mobile device to extract the pattern.

33. The method of claim 32, wherein the comparing the pattern and the operational data of the mobile device further comprises comparing the operational data with the rule to determine whether a current user behavior is contrary to the rule, indicating the pattern is the new pattern, whether the pattern is the new pattern based on repetitive user behaviors and also indicating a new rule, or whether the user's next action will be strongly predicted according to the pattern and based on the rule being met.

34. The method of any of claims 25 to 33, wherein the initiating of the dialogue further comprises modifying an appearance and behavior of a character agent interacting with the user.

35. The method of any of claims 25 to 34, wherein the mobile device performs mobile communication.

36. The method of claim 35, wherein when the rule corresponds to anticipating a next cell station or next mobile device location based on the pattern and the character agent module initiates the dialogue with the user regarding the next cell station or next mobile device location.

37. The method of claim 35 or 36, wherein the rule corresponds to agenda information and time information to anticipate a change in a messaging alert operation of the mobile device and automating the change in the messaging alert operation.

38. The method of claim 37, wherein the automating of the change in the messaging alert operation comprises initiating the dialogue with the user as to whether to change the messaging alert operation of the mobile device based on previous changing of the messaging alert operation upon similar agenda information and time information.

39. The method of claim 35, 36, 37 or 38, wherein the rule corresponds to at least two of call log information, contact information, and time information to anticipate a user's next messaging operation based on previous messaging operations.

40. The method of claim 39, further comprising, upon anticipating the user's next messaging operation, initiating the dialogue with the user as to whether to initiate the next messaging operation.

41. The method of any of claims 25 to 40, wherein a user response to the dialogue initiation comprises one of pressing an OK button, pressing a cancel button, ceasing operation of the mobile device, and manually inputting a response in a text box.

42. The method of any of claims 25 to 41, wherein the initiating of the dialogue is delayed based upon an operational state of the mobile device.

43. The method of claim 42, wherein the operational state includes at least one of a current occurrence of a call operation, a data transmission operation, and whether the mobile device is in a stand-by mode.

44. The method of claim 42 or 43, wherein an urgency of the dialogue determines whether to initiate the delay of the dialogue, thereby overriding the delaying based upon the operational state of the mobile device.

45. The method of claim 44, wherein urgencies of potential dialogues can be set by a user to override the delaying based upon the operational state of the mobile device.

46. The method of claim 44 or 45, wherein, when overriding the delaying of the dialogue, the dialogue is initiated through a beeping by a beeper of the mobile device.

47. The method of claim 44, 45 or 46, wherein, when overriding the delaying of the dialogue, the dialogue is initiated through a vibrating by a vibrator of the mobile device.

48. A computer program comprising computer program code means adapted to perform all of the steps of any of claims 25 to 47 when said program is run on a computer.

49. A computer program as claimed in claim 48 embodied on a computer readable medium.

## Patentansprüche

1. Mobiles System umfassend:
einen Musterextraktormodul (20) so ausgebildet, dass er ein Betriebsmuster eines Mobilgeräts basierend auf Betriebsdaten für das Mobilgerät erfasst;
einen Musteranalysatormodul (10) so ausgebildet, dass er das Muster und die Betriebsdaten des Mobilgeräts vergleicht, um zu bestimmen, ob das Muster ein neues Muster ist, das zuvor für das mobile System nicht erannt wurde, und wenn bestimmt ist, dass das Muster nicht neu ist, zu bestimmen, ob basierend darauf, dass ein Element einer entsprechenden Regel für das Muster erfüllt ist, ein Dialog mit einem Benutzer bezüglich des Musters ausgelöst wird; und
einen Charakteragentmodul (40) so ausgebildet, dass er basierend auf dem Muster den Dialog mit dem Benutzer auslöst, wobei Anleitung zur Implementierung einer Funktion des Mobilgeräts angefordert wird,
und **dadurch gekennzeichnet, dass** der Musteranalysatormodul so ausgebildet ist, dass er einen Dialog mit dem Benutzer auslöst, um Information für ein neues Muster aufzuzeichnen, wenn bestimmt ist, dass das Muster neu ist.

2. Mobiles System nach Anspruch 1, wobei der Musteranalysatormodul (10) so ausgebildet ist, dass er die Bestimmung, ob der Dialog ausgelöst werden soll, auf einen Wahrscheinlichkeitsfaktor basiert, der im mobilen System gespeichert ist, und der eine Wahrscheinlichkeit angibt, dass der Benutzer eine automatische Implementierung der Funktion des Mobilgeräts ohne Dialog bevorzugt.

3. Mobiles System nach Anspruch 2, wobei die Wahrscheinlichkeit, dass der Benutzer eine automatische Implementierung der Funktion des Mobilgeräts ohne Dialog bevorzugt, auf vorhergehenden wiederholten Zustimmungen des Benutzers bei vorhergehenden Dialogen bezüglich des Musters basiert.

4. Mobiles System nach Anspruch 2, wobei der Wahrscheinlichkeitsfaktor ferner so ausgebildet ist, dass er eine Abneigung des Benutzers gegen ein Implementieren der Funktion des Mobilgeräts und/oder einen Empfang des Dialogs identifiziert.

5. Mobiles System nach Anspruch 4, wobei der Wahrscheinlichkeitsfaktor ferner die Abneigung des Benutzers gegen ein Implementieren der Funktion des Mobilgeräts und/oder einen Empfang des Dialogs basierend auf vorhergehenden wiederholten Ablehnungen des Benutzers bei vorhergehenden Dialogen bezüglich des Musters identifiziert.

6. Mobiles System nach einem der vorhergehenden Ansprüche, wobei die Regel eine mehrelementige Regel ist, die erfordert, dass mindestens zwei Elemente erfüllt sind, damit das Muster mit einem zuvor bekannten Muster des mobilen Systems übereinstimmt.

7. Mobiles System nach einem der vorhergehenden Ansprüche, ferner umfassend ein Gerätesensorsystem (30) umfassend mindestens eines von:
einem Lageinformationssensormodul (33) so ausgebildet, dass er eine Lage des Mobilgeräts bestimmt;
einem Zeitsensormodul (34) so ausgebildet, dass er eine aktuelle Zeit bestimmt;
einem Agendasensormodul (35) so ausgebildet, dass er eine aktuelle und kommende Agenda für den Benutzer aus einer im mobilen System gespeicherten Agendadatenbank bestimmt;
einem Kontaktsensormodul (37) so ausgebildet, dass er eine Kontakttelefonnummer und zusätzliche Information aus einer im mobilen System gespeicherten Kontaktdatenbank extrahiert; und/oder
einem Anrufprotokollsensormodul (36) so ausgebildet, dass er Zeit, Dauer und Kontaktinformation aus einem im mobilen System gespeicherten Anrufprotokoll extrahiert.

8. Mobiles System nach einem der vorhergehenden Ansprüche, wobei der Musterextraktormodul (20) so ausgebildet ist, dass er Betriebsdaten aus mindestens einem Lagedatum, mindestens einem aktuellen Zeitdatum, mindestens einem Agendadatum und/oder mindestens einem Anrufprotokolldatum und Kontaktdaten für das Mobilgerät vergleicht, um das Muster zu extrahieren.

9. Mobiles System nach Anspruch 8, wobei der Musteranalysatormodul (10) ferner dazu ausgebildet ist, die Betriebsdaten mit der Regel zu vergleichen, um zu bestimmen, ob ein aktuelles Benutzerverhalten der Regel widerspricht, basierend auf wiederholtem Benutzerverhalten anzugeben, dass das Muster das neue Muster ist, und eine neue Regel anzugeben oder anzugeben, ob die nächste Aktion des Benutzers gemäß dem Muster und basierend auf der Erfüllung der Regel stark vorhergesagt ist.

10. Mobiles System nach einem der vorhergehenden Ansprüche, wobei der Charakteragentmodul (40) so ausgebildet ist, dass er ein Auftreten und Verhalten eines mit dem Benutzer interagierenden Charakteragenten modifiziert.

11. Mobiles System nach einem der vorhergehenden Ansprüche, wobei das Mobilgerät ein mobiles Kommunikationssystem umfasst.

12. Mobiles System nach Anspruch 11, wobei die Regel einer Erwartung einer nächsten Zellstation oder einer nächsten Mobilgerätelage basierend auf dem Muster entspricht, und der Charakteragentmodul (40) so ausgebildet ist, dass er den Dialog mit dem Benutzer bezüglich der nächsten Zellstation oder der nächsten Mobilgerätelage auslöst.

13. Mobiles System nach Anspruch 11 oder 12, wobei die Regel, die Agendainformation und Zeitinformation entspricht, so ausgebildet ist, dass sie eine Veränderung in einer Erinnerungsmitteilungsfunktion des Mobilgeräts vorhersieht und das System so ausgebildet ist, dass es die Veränderung der Erinnerungsmitteilungsfunktion automatisiert.

14. Mobiles System nach Anspruch 13, wobei die Automatisierung der Veränderung der Erinnerungsmitteilungsfunktion ein Auslösen des Dialogs mit dem Benutzer darüber umfasst, ob die Erinnerungsmitteilungsfunktion des Mobilgeräts verändert werden soll, basierend auf vorhergehender Veränderung der Erinnerungsmitteilungsfunktion bei ähnlicher Agendainformation und Zeitinformation.

15. Mobiles System nach einem der Ansprüche 11 bis 14, wobei die Regel mindestens zweien von Anrufprotokollinformation, Kontaktinformation und Zeitinformation entspricht, um eine nächste Mitteilungsfunktion des Benutzers basierend auf vorhergehenden Mitteilungsfunktionen vorherzusehen.

16. Mobiles System nach Anspruch 15, so ausgebildet, dass es den Dialog mit dem Benutzer darüber auslöst, ob die nächste Erinnerungsmitteilungsfunktion ausgelöst werden soll, wenn die nächste Mitteilungsfunktion des Benutzers vorhergesagt wird.

17. Mobiles System nach einem der vorhergehenden Ansprüche, so ausgebildet, dass es als Benutzerantwort auf die Dialogauslösung ein Drücken einer OK-Taste, ein Drücken einer Löschtaste, ein Beenden der Funktion des Mobilgeräts und/oder eine Eingabe einer Antwort in eine Textbox von Hand akzeptiert.

18. Mobiles System nach einem der vorhergehenden Ansprüche, so ausgebildet, dass es die Auslösung des Dialogs durch den Charakteragentmodul (40) basierend auf einem Betriebszustand des Mobilgeräts verzögert.

19. Mobiles System nach Anspruch 18, wobei der Betriebszustand eine aktuell stattfindende Anruffunktion, eine Datenübertragungsfunktion und/oder einen Standbymodus des Mobilgeräts beinhaltet.

20. Mobiles System nach Anspruch 18 oder 19, wobei eine Dringlichkeit des Dialogs so ausgebildet ist, dass bestimmt wird, ob der Charakteragentmodul (40) eine Auslösung des Dialogs verzögert, wodurch die Verzögerung basierend auf dem Betriebszustand des Mobilgeräts aufgehoben wird.

21. Mobiles System nach Anspruch 20, so ausgebildet, dass ermöglicht ist, dass die Dringlichkeiten potentieller Dialoge von einem Benutzer eingestellt werden, so dass die Verzögerung basierend auf dem Betriebszustand des Mobilgeräts aufgehoben wird.

22. Mobiles System nach Anspruch 20 oder 21, wobei, wenn der Charakteragentmodul (40) so ausgebildet ist, dass er die Verzögerung des Dialogs aufhebt und den Dialog auslöst, der Dialog so ausgebildet ist, dass er durch einen Piepser des Mobilgeräts ausgelöst wird.

23. Mobiles System nach Anspruch 20, 21 oder 22, derart ausgebildet, dass, wenn der Charakteragentmodul (40) so ausgebildet ist, dass er die Verzögerung des Dialogs aufhebt und den Dialog auslöst, es geeignet ist, den Dialog durch einen Vibrator des Mobilgeräts auszulösen.

24. Mobiles System nach einem der vorhergehenden Ansprüche, wobei das mobile Telefonsystem ein Mobiltelefon ist.

25. Verfahren zum automatisierten Betrieb eines mobilen Systems umfassend die Schritte:
Extrahieren eines Betriebsmusters eines Mobilgeräts basierend auf Betriebsdaten für das Mobilgerät;
Vergleichen des Musters und der Betriebsdaten des Mobilgeräts, um zu bestimmen, ob das Muster ein neues Muster ist, das zuvor für das mobile System nicht erkannt wurde, und wenn bestimmt ist, dass das Muster nicht neu ist, Bestimmen, ob basierend darauf, dass ein Element einer entsprechenden Regel für das Muster erfüllt ist, ein Dialog mit einem Benutzer bezüglich des Musters ausgelöst wird; und
Durchführen des Dialogs mit dem Benutzer, der basierend auf dem Muster, nach einer Auslösung eine Anleitung zur Implementierung einer Funktion des Mobilgeräts anfordert,
und **gekennzeichnet durch** den Schritt, wenn bestimmt ist, dass das Muster neu ist, Auslösen eines Dialogs mit dem Benutzer, um Information für das neue Muster aufzuzeichnen.

26. Verfahren nach Anspruch 25, wobei das Bestimmen, ob der Dialog ausgelöst werden soll, auf einem Wahrscheinlichkeitsfaktor basiert, der im mobilen System gespeichert ist, der eine Wahrscheinlichkeit angibt, dass der Benutzer eine automatische Implementierung der Funktion des Mobilgeräts ohne Dialog bevorzugt.

27. Verfahren nach Anspruch 26, wobei die Wahrscheinlichkeit, dass der Benutzer eine automatische Implementierung der Funktion des Mobilgeräts ohne Dialog bevorzugt, auf vorhergehenden wiederholten Zustimmungen des Benutzers bei vorhergehenden Dialogen bezüglich des Musters basiert.

28. Verfahren nach Anspruch 26 oder 27, wobei der Wahrscheinlichkeitsfaktor ferner eine Abneigung des Benutzers gegen ein Implementieren der Funktion des Mobilgeräts und/oder einen Empfang des Dialogs identifiziert.

29. Verfahren nach Anspruch 28, wobei der Wahrscheinlichkeitsfaktor ferner die Abneigung des Benutzers gegen ein Implementieren der Funktion des Mobilgeräts und/oder einen Empfang des Dialogs basierend auf vorhergehenden wiederholten Ablehnungen des Benutzers bei vorhergehenden Dialogen bezüglich des Musters identifiziert.

30. Verfahren nach einem der Ansprüche 25 bis 29, wobei die Regel eine mehrelementige Regel ist, die erfordert, dass mindestens zwei Elemente erfüllt sind, damit das Muster mit einem zuvor bekannten Muster übereinstimmt.

31. Verfahren nach einem der Ansprüche 25 bis 30, ferner umfassend mindestens eines von:
Bestimmen einer Lage des Mobilgeräts;
Bestimmen einer aktuellen Zeit;
Bestimmen einer aktuellen und kommenden Agenda für den Benutzer;
Extrahieren einer Kontakttelefonnummer und zusätzlicher Information aus einer Kontaktdatenbank und/oder
Extrahieren von Zeit, Dauer und Kontaktinformation aus einem Anrufprotokoll.

32. Verfahren nach einem der Ansprüche 25 bis 31, wobei das Extrahieren des Musters ferner ein Vergleichen von Betriebsdaten aus mindestens einem Lagedatum, mindestens einem aktuellen Zeitdatum, mindestens einem Agendadatum und/oder mindestens einem Anrufprotokolldatum und Kontaktdaten für das Mobilgerät umfasst, um das Muster zu extrahieren.

33. Verfahren nach Anspruch 32, wobei das Vergleichen des Musters und der Betriebsdaten des Mobilgeräts ferner ein Vergleichen der Betriebsdaten mit der Regel umfasst, um zu bestimmen, ob ein aktuelles Benutzerverhalten der Regel widerspricht, Angeben basierend auf wiederholtem Benutzerverhalten, dass das Muster das neue Muster ist, Angeben einer neuen Regel oder Angeben, ob die nächste Aktion des Benutzers gemäß dem Muster und basierend auf der Erfüllung der Regel stark vorhergesagt ist.

34. Verfahren nach einem der Ansprüche 25 bis 33, wobei das Auslösen des Dialogs ferner ein Modifizieren von Auftreten und Verhalten eines mit dem Benutzer interagierenden Charakteragenten umfasst.

35. Verfahren nach einem der Ansprüche 25 bis 34, wobei das Mobilgerät Mobilkommunikation durchführt.

36. Verfahren nach Anspruch 35, wobei, wenn die Regel einer Erwartung einer nächsten Zellstation oder einer nächsten Mobilgerätelage basierend auf dem Muster entspricht, der Charakteragentmodul den Dialog mit dem Benutzer bezüglich der nächsten Zellstation oder der nächsten Mobilgerätelage auslöst.

37. Verfahren nach Anspruch 35 oder 36, wobei die Regel Agendainformation und Zeitinformation entspricht, so dass sie eine Veränderung in einer Erinnerungsmitteilungsfunktion des Mobilgeräts vorhersieht und das System so ausgebildet ist, dass es die Veränderung der Erinnerungsmitteilungsfunktion automatisiert.

38. Verfahren nach Anspruch 37, wobei die Automatisierung der Veränderung der Erinnerungsmitteilungsfunktion ein Auslösen des Dialogs mit dem Benutzer darüber umfasst, ob die Erinnerungsmitteilungsfunktion des Mobilgeräts basierend auf vorhergehender Veränderung der Erinnerungsmitteilungsfunktion bei ähnlicher Agendainformation und Zeitinformation verändert werden soll.

39. Verfahren nach Anspruch 35, 36, 37 oder 38, wobei die Regel mindestens zweien von Anrufprotokollinformation, Kontaktinformation und Zeitinformation entspricht, um eine nächste Mitteilungsfunktion des Benutzers basierend auf vorhergehenden Mitteilungsfunktionen vorherzusehen.

40. Verfahren nach Anspruch 39, ferner umfassend bei Vorhersehen der nächsten Mitteilungsfunktion des Benutzers, Auslösen des Dialogs mit dem Benutzer darüber, ob die nächste Mitteilungsfunktion ausgelöst werden soll.

41. Verfahren nach einem der Ansprüche 25 bis 40, wobei eine Benutzerantwort auf die Dialogauslösung ein Drücken einer OK-Taste, ein Drücken einer Löschtaste, ein Beenden der Funktion des Mobilgeräts und/oder eine Eingabe einer Antwort in eine Textbox von Hand umfasst.

42. Verfahren nach einem der Ansprüche 25 bis 41, wobei das Auslösen des Dialogs basierend auf einem Betriebszustand des Mobilgeräts verzögert wird.

43. Verfahren nach Anspruch 42, wobei der Betriebszustand eine aktuell stattfindende Anruffunktion, eine Datenübertragungsfunktion und/oder einen Standbymodus des Mobilgeräts beinhaltet.

44. Verfahren nach Anspruch 42 oder 43, wobei eine Dringlichkeit des Dialogs bestimmt, ob die Verzögerung des Dialogs ausgelöst wird, wobei die Verzögerung basierend auf dem Betriebszustand des Mobilgeräts aufgehoben wird.

45. Verfahren nach Anspruch 44, wobei Dringlichkeiten potentieller Dialoge von einem Benutzer eingestellt werden können, so dass die Verzögerung basierend auf dem Betriebszustand des Mobilgeräts aufgehoben wird.

46. Verfahren nach Anspruch 44 oder 45, wobei, wenn die Verzögerung des Dialogs aufgehoben wird, der Dialog durch ein Piepsen eines Piepsers des Mobilgeräts ausgelöst wird.

47. Verfahren nach Anspruch 44, 45 oder 46, wobei, wenn die Verzögerung des Dialogs aufgehoben wird, der Dialog durch ein Vibrieren eines Vibrators des Mobilgeräts ausgelöst wird.

48. Computerprogramm umfassend ein Computerprogrammcodemittel, das dazu ausgebildet ist, alle Schritte nach einem der Ansprüche 25 bis 47 auszuführen, wenn das Programm auf einem Computer läuft.

49. Computerprogramm nach Anspruch 48, das auf einem computerlesbaren Medium verkörpert ist.

## Revendications

1. Système mobile, comprenant :
un module extracteur de profil (20) agencé pour détecter un profil de fonctionnement d'un dispositif mobile sur la base de données opérationnelles du dispositif mobile ;
un module analyseur de profil (10) agencé pour comparer le profil et les données opérationnelles du dispositif mobile pour déterminer si le profil est un nouveau profil qui n'a pas été reconnu précédemment pour le système mobile, et, si on détermine que le profil n'est pas nouveau, pour déterminer s'il convient de lancer un dialogue avec un utilisateur en ce qui concerne le profil sur la base d'un élément d'une règle correspondante satisfaisante pour le profil ; et
un module agent de caractère (40) agencé pour lancer le dialogue avec l'utilisateur demandant des conseils sur la mise en application d'un fonctionnement du dispositif mobile sur la base du profil,
et **caractérisé en ce que** le module analyseur de profil est agencé pour lancer un dialogue avec l'utilisateur pour enregistrer les informations d'un nouveau profil si on détermine que le profil est nouveau.

2. Système mobile selon la revendication 1, dans lequel le module analyseur de profil (10) est agencé pour baser la détermination du fait qu'il convient de lancer ou pas le dialogue sur un facteur de probabilité stocké dans le système mobile indiquant une probabilité selon laquelle l'utilisateur préférerait que le fonctionnement du dispositif mobile soit automatiquement mis en application sans dialogue.

3. Système mobile selon la revendication 2, dans lequel la probabilité selon laquelle l'utilisateur préférerait que le fonctionnement du dispositif mobile soit mis en application de manière automatique sans dialogue, est basée sur des approbations réitérées précédentes, de la part de l'utilisateur, des dialogues précédents qui concernent le profil.

4. Système mobile selon la revendication 2, dans lequel le facteur de probabilité est agencé de plus pour identifier une réticence de l'utilisateur à mettre en application le fonctionnement du dispositif mobile et/ou à recevoir le dialogue.

5. Système mobile selon la revendication 4, dans lequel le facteur de probabilité identifiant de plus la réticence de l'utilisateur à mettre en application le fonctionnement du dispositif mobile et/ou à recevoir le dialogue, est basé sur les désapprobations réitérées précédentes, de la part de l'utilisateur, des dialogues précédents qui concernent le profil.

6. Système mobile selon l'une quelconque des revendications précédentes, dans lequel la règle est une règle à plusieurs éléments qui requiert pour le profil la présence d'au moins deux éléments pour avoir une correspondance avec un profil connu précédemment du système mobile.

7. Système mobile selon l'une quelconque des revendications précédentes, comprenant de plus un système de détecteur de dispositif (30) comprenant au moins l'un:
d'un module détecteur d'informations d'emplacement (33) agencé pour déterminer un emplacement du dispositif mobile ;
d'un module détecteur d'heure (34) agencé pour déterminer une heure actuelle ;
d'un module détecteur d'ordre du jour (35) agencé pour déterminer un ordre du jour actuel et à venir de l'utilisateur à partir d'une base de données d'ordre du jour stockée dans le système mobile ;
d'un module détecteur de contacts (37) agencé pour extraire un numéro de téléphone de contacts et des informations complémentaires à partir d'une base de données de contacts stockée dans le système mobile ; et/ou
d'un module détecteur de journal d'appel (36) agencé pour extraire des informations d'heure, de durée et de contact à partir d'un journal d'appel stocké dans le système mobile.

8. Système mobile selon l'une quelconque des revendications précédentes, dans lequel le module extracteur de profil (20) est agencé pour comparer des données opérationnelles au moins parmi au moins une donnée d'emplacement, au moins, une donnée d'heure actuelle, au moins une donnée d'ordre du jour, et/ou au moins une donnée de journal d'appel et une donnée de contacts du dispositif mobile, pour extraire le profil.

9. Système mobile selon la revendication 8, dans lequel le module analyseur de profil (10) est agencé de plus pour comparer les données opérationnelles à la règle pour déterminer si un comportement d'utilisateur actuel est contraire à la règle, pour indiquer que le profil est le nouveau profil, si le profil est le nouveau profil sur la base des comportements réitérés de l'utilisateur et pour indiquer également une nouvelle règle, ou si la prochaine action de l'utilisateur sera fortement prévisible selon le profil et sur la base de la règle satisfaite.

10. Système mobile selon l'une quelconque des revendications précédentes, dans lequel le module agent de caractère (40) est agencé pour modifier un aspect et un comportement d'un agent de caractère qui interagit avec l'utilisateur.

11. Système mobile selon l'une quelconque des revendications précédentes, dans lequel le dispositif mobile comprend un système de communication mobile.

12. Système mobile selon la revendication 11, dans lequel la règle correspond à la prévision d'une prochaine station cellulaire ou d'un prochain emplacement du dispositif mobile sur la base du profil, et le module agent de caractère (40) est agencé pour lancer le dialogue avec l'utilisateur en ce qui concerne la prochaine station cellulaire ou le prochain emplacement du dispositif mobile.

13. Système mobile selon l'une quelconque des revendications 11 ou 12, dans lequel la règle correspond à des informations d'ordre du jour et des informations d'heure sont agencées pour prévoir un changement dans une opération d'alerte de messagerie du dispositif mobile et le système est agencé pour automatiser le changement de l'opération d'alerte de messagerie.

14. Système mobile selon la revendication 13, dans lequel l'automatisation du changement de l'opération d'alerte de messagerie comprend le déclenchement d'un dialogue avec l'utilisateur afin de savoir s'il convient de changer l'opération d'alerte de messagerie du dispositif mobile sur la base d'un changement précédent de l'opération d'alerte de messagerie sur les informations d'ordre du jour et les informations d'heure similaires.

15. Système mobile selon l'une quelconque des revendications 11 à 14, dans lequel la règle correspond au moins à deux ensembles d'informations parmi les informations de journal d'appel, les informations de contact, et les informations d'heure pour prévoir la prochaine opération de messagerie d'un utilisateur sur la base des opérations de messagerie précédentes.

16. Système mobile selon la revendication 15, agencé pour lancer le dialogue avec l'utilisateur pour savoir s'il convient de lancer la prochaine opération de messagerie en prévoyant la prochaine opération de messagerie d'utilisateur.

17. Système mobile selon l'une quelconque des revendications précédentes, agencé pour accepter en tant que réponse de l'utilisateur au déclenchement d'un dialogue l'une des actions consistant à appuyer sur un bouton OK, appuyer sur un bouton d'annulation, mettre fin au fonctionnement du dispositif mobile, et entrer manuellement une réponse dans une zone de texte.

18. Système mobile selon l'une quelconque des revendications précédentes, agencé pour retarder le lancement du dialogue par le module agent de caractère (40), le retard étant basé sur un état opérationnel du dispositif mobile.

19. Système mobile selon la revendication 18, dans lequel l'état opérationnel comprend au moins l'une d'une occurrence actuelle d'une opération d'appel, d'une opération de transmission de données, et si le dispositif mobile se trouve dans un mode d'attente (ou pas).

20. Système mobile selon l'une quelconque des revendications 18 ou 19, dans lequel une urgence du dialogue est agencée pour déterminer si le module agent de caractère (40) retarde le déclenchement du dialogue, en ignorant de ce fait le retardement sur la base de l'état opérationnel du dispositif mobile.

21. Système mobile selon la revendication 20, agencé pour permettre à un utilisateur de régler les urgences des dialogues potentiels pour ignorer le retardement sur la base de l'état opérationnel du dispositif mobile.

22. Système mobile selon l'une quelconque des revendications 20 ou 21, dans lequel, lorsque le module agent de caractère (40) est agencé pour ignorer le retardement du dialogue et pour lancer le dialogue, le dialogue est agencé pour être lancé par un avertisseur sonore du dispositif mobile.

23. Système mobile selon l'une quelconque des revendications 20, 21 ou 22, agencé de telle sorte que, lorsque le module agent de caractère (40) est agencé pour ignorer le retardement du dialogue et pour lancer le dialogue, il est adapté pour lancer le dialogue par l'intermédiaire d'un vibreur du dispositif mobile.

24. Système mobile selon l'une quelconque des revendications précédentes, dans lequel le système de téléphonie mobile est un téléphone mobile.

25. Procédé de fonctionnement mobile automatisé comprenant les étapes consistant à :
extraire un profil de fonctionnement d'un dispositif mobile sur la base de données opérationnelles du dispositif mobile ;
comparer le profil et les données opérationnelles du dispositif mobile pour déterminer si le profil est un nouveau profil qui n'a pas été reconnu précédemment pour le système mobile, et, si on détermine que le profil n'est pas nouveau, pour déterminer s'il convient de lancer un dialogue avec un utilisateur en ce qui concerne le profil sur la base d'un élément d'une règle correspondante satisfaisante pour le profil ; et
exécuter le dialogue avec l'utilisateur, une fois lancé, en demandant des conseils sur la mise en application d'un fonctionnement de l'appareil mobile sur la base du profil,
et **caractérisé par** l'étape de lancement d'un dialogue avec l'utilisateur, si on détermine que le profil est nouveau, pour enregistrer les informations du nouveau profil.

26. Procédé selon la revendication 25, dans lequel la détermination du déclenchement du dialogue comprend de plus le fait de baser la détermination du déclenchement du dialogue sur un facteur de probabilité stocké dans le système mobile qui indique la probabilité selon laquelle l'utilisateur préférerait que le fonctionnement du dispositif mobile soit mis en application de manière automatique sans dialogue.

27. Procédé selon la revendication 26, dans lequel la probabilité selon laquelle l'utilisateur préférerait que le fonctionnement du dispositif mobile soit mis en application de manière automatique sans dialogue, est basée sur des approbations réitérées précédentes, de la part de l'utilisateur, des dialogues précédents qui concernent le profil.

28. Procédé selon l'une quelconque des revendications 26 ou 27, dans lequel le facteur de probabilité identifie de plus une réticence de l'utilisateur à mettre en application le fonctionnement du dispositif mobile et/ou à recevoir le dialogue.

29. Procédé selon la revendication 28, dans lequel le facteur de probabilité identifiant de plus la réticence de l'utilisateur à mettre en application le fonctionnement du dispositif mobile et/ou à recevoir le dialogue, est basé sur les désapprobations réitérées précédentes, de la part de l'utilisateur, des dialogues précédents qui concernent le profil.

30. Procédé selon l'une quelconque des revendications 25 à 29, dans lequel la règle est une règle à plusieurs éléments qui requiert au moins la présence de deux éléments du profil pour avoir une correspondance avec un profil connu précédemment.

31. Procédé selon l'une quelconque des revendications 25 à 30, comprenant de plus l'une au moins des étapes consistant à :
déterminer un emplacement du dispositif mobile ;
déterminer une heure actuelle ;
déterminer un ordre du jour actuel et à venir de l'utilisateur ;
extraire un numéro de téléphone et des informations complémentaires de contacts à partir d'une base de données de contacts ; et/ou
extraire des informations d'heure, de durée et de contact à partir d'un journal d'appel.

32. Procédé selon l'une quelconque des revendications 25 à 31, dans lequel l'extraction du profil comprend la comparaison de données opérationnelles au moins parmi au moins une donnée d'emplacement, au moins une donnée d'heure actuelle, ou au moins une donnée d'ordre du jour, et/ou au moins une donnée de journal d'appel et une donnée de contacts du dispositif mobile, pour extraire le profil.

33. Procédé selon la revendication 32, dans lequel la comparaison du profil et des données opérationnelles du dispositif mobile comprend de plus une comparaison des données opérationnelles à la règle pour déterminer si un comportement d'utilisateur actuel est contraire à la règle, une indication que le profil est le nouveau profil, si le profil est le nouveau profil sur la base des comportements réitérés d'utilisateur et indiquer également une indication d'une nouvelle règle, ou si la prochaine action de l'utilisateur sera fortement prévisible selon le profil et sur la base de la règle satisfaite.

34. Procédé selon l'une quelconque des revendications 25 à 33, dans lequel le lancement du dialogue comprend de plus la modification d'un aspect et d'un comportement d'un agent de caractère qui interagit avec l'utilisateur.

35. Procédé selon l'une quelconque des revendications 25 à 34, dans lequel le dispositif mobile exécute une communication mobile.

36. Procédé selon la revendication 35, dans lequel, lorsque la règle correspond à la prévision d'une prochaine station cellulaire ou d'un prochain emplacement d'un dispositif mobile sur la base du profil, le module agent de caractère lance le dialogue avec l'utilisateur en ce qui concerne la prochaine station cellulaire ou le prochain emplacement du dispositif mobile.

37. Procédé selon l'une quelconque des revendications 35 ou 36, dans lequel la règle correspond aux informations d'ordre du jour et aux informations d'heure pour prévoir un changement dans une opération d'alerte de messagerie du dispositif mobile et automatiser le changement de l'opération d'alerte de messagerie.

38. Procédé selon la revendication 37, dans lequel l'automatisation du changement de l'opération d'alerte de messagerie comprend le déclenchement du dialogue avec l'utilisateur afin de savoir s'il convient de changer l'opération d'alerte de messagerie du dispositif mobile sur la base d'un changement précédent de l'opération d'alerte de messagerie sur des informations d'ordre du jour et des informations d'heure similaires.

39. Procédé selon l'une quelconque des revendications 35, 36, 37 ou 38, dans lequel la règle correspond au moins à deux ensembles d'informations parmi les informations de journal d'appel, les informations de contact, et les informations d'heure pour prévoir la prochaine opération de messagerie d'un utilisateur sur la base des opérations de messagerie précédentes.

40. Procédé selon la revendication 39, comprenant de plus, lors de la prévoyance de la prochaine opération de messagerie de l'utilisateur, le lancement d'un dialogue avec l'utilisateur pour savoir s'il convient de lancer la prochaine opération de messagerie.

41. Procédé selon l'une quelconque des revendications 25 à 40, dans lequel une réponse de l'utilisateur au déclenchement d'un dialogue comprend l'une des actions consistant à appuyer sur un bouton OK, appuyer sur un bouton d'annulation, mettre fin au fonctionnement du dispositif mobile, et entrer manuellement une réponse dans une zone de texte.

42. Procédé selon l'une quelconque des revendications 25 à 41, dans lequel le lancement du dialogue est retardé sur la base d'un état opérationnel du dispositif mobile.

43. Procédé selon la revendication 42, dans lequel l'état opérationnel comprend au moins l'une d'une occurrence actuelle d'une opération d'appel, d'une opération de transmission de données, et si le dispositif mobile se trouve dans un mode d'attente (ou pas).

44. Procédé selon l'une quelconque des revendications 42 ou 43, dans lequel une urgence du dialogue détermine le fait de savoir s'il convient de lancer le retard du dialogue, en ignorant de ce fait le retardement sur la base de l'état opérationnel du dispositif mobile.

45. Procédé selon la revendication 44, dans lequel un utilisateur a la possibilité de régler les urgences des dialogues potentiels pour ignorer le retardement sur la base de l'état opérationnel du dispositif mobile.

46. Procédé selon l'une quelconque des revendications 44 ou 45, dans lequel, lors de l'ignorance du retardement du dialogue, le dialogue est lancé par l'intermédiaire d'un avertissement sonore déclenché par un avertisseur sonore du dispositif mobile.

47. Procédé selon l'une quelconque des revendications 44, 45 ou 46, dans lequel, lors de l'ignorance du retardement du dialogue, le dialogue est lancé par l'intermédiaire de vibrations déclenchées par un vibreur du dispositif mobile.

48. Programme d'ordinateur comprenant des moyens de code de programme d'ordinateur adaptés pour exécuter toutes les étapes de l'une quelconque des revendications 25 à 47 lorsque ledit programme est exécuté sur un ordinateur.

49. Programme d'ordinateur selon la revendication 48, incorporé dans un support pouvant être lu par un ordinateur.
